# EUROPEAN PATENT APPLICATION

(11) **EP 3 742 568 A1**
(43) Date of publication of application: **25.11.2020**
(21) Application number: 19175982.8
(22) Date of filing: 22.05.2019
(51) Int. Cl.: H02H 7/122, H02H 9/04

(54) **OVERVOLTAGE PROTECTION CIRCUIT, POWER CONVERTER, ELECTRIC DRIVE DEVICE AND VEHICLE**

(71) Applicant: Valeo Siemens eAutomotive Germany GmbH, 91056 Erlangen (DE)
(72) Inventor: Lempidis, Georgios, 91058 Erlangen (DE)
(74) Representative: Dr. Gassner & Partner mbB

(57) **Abstract**

Overvoltage protection circuit (13) for a DC link (6) of a power converter (2), comprising
- a first terminal (14) connectable to a first potential line (9) of the DC link (6),
- a second terminal (15) connectable to a second potential line (10) of the DC link (6),
- a current sink unit (16) having a control terminal (17) and being configured to allow a current flow (18) from one of the terminals (14) to the other terminal (15) for reducing an overvoltage in the DC link (6) depending on a control signal at the control terminal (17) and
- a passive voltage detection unit (24) connected between the first terminal (14) and the second terminal (15) and configured to provide the control signal to the control terminal (17) upon detecting that a voltage (12) across the terminals (14, 15) reaches or exceeds a threshold voltage.

## Description

The present invention relates to an overvoltage protection circuit for a DC link of a power converter, comprising a first terminal connectable to a first potential line of the DC link, a second terminal connectable to a second potential line of the DC link and a current sink unit having a control terminal and being configured to allow a current flow from one of the terminals to the other terminal for reducing an overvoltage in the DC link depending on a control signal at the control terminal.

Besides, the present invention refers to a power converter, an electric drive device and a vehicle.

Overvoltage protection circuits for a DC link of a power converter are commonly known. Typically, a DC link capacitor for smoothing a DC link voltage is connected in parallel to the first terminal and the second terminal of the overvoltage protection circuit. In the case of a load dump, in which a DC voltage source is disconnected from the DC link, a current that is fed back through the power converter during a transition period required until the power converter realizes that the load dump occurred may be high enough to increase the DC link voltage beyond maximum rated voltages of components of the DC link, particularly the DC link capacitor. This may damage or destroy the components.

Known overvoltage protection circuits comprise an active measuring device for detecting the DC link voltage and a control device that activates a current sink unit of the overvoltage protection circuit so as to absorb the energy fed back to the DC link. However, such overvoltage protection circuits are complex and require an external power supply to operate.

It is therefore an object of the present invention to protect a DC link of the power converter robustly and/or with low technical effort.

According to the present invention the above object is solved by an overvoltage protection circuit as initially described comprising a passive voltage detection unit connected between the first terminal and the second terminal and configured to provide the control signal to the control terminal upon detecting that a voltage across the terminals reaches or exceeds a threshold voltage.

The invention aims to realize a voltage detection in the overvoltage protection circuit by means of passive components that are capable of detecting an overvoltage defined by the threshold voltage and to activate the current sink unit based on the control signal provided by the passive voltage detection unit. Thereby, conventional means for measuring a DC link voltage and control circuits that require a high number of components can be omitted. Advantageously, this results in significantly reduced effort and costs of the inventive overvoltage protection circuit. Furthermore, the passive voltage detection unit does not need an external power supply on which an operation of conventional overvoltage protection circuits depends. Thus, the inventive overvoltage protection circuit is robustly operable and highly reliable as a further advantage.

Preferably, the threshold voltage is higher than the maximum operation voltage of a DC voltage source, particularly a battery, connected or connectable to the DC link and/or lower than a maximum rated voltage of a complement of the DC link, particularly a DC link capacitor. Typically, the passive voltage detection unit is configured to provide the control signal such that is causes to stop the current flow when the voltage across the terminals falls below the predefined threshold value or a voltage between the threshold voltage and the maximum rated voltage.

The passive voltage detection unit may be configured to provide a voltage of the control signal as a function of a difference between the voltage across the terminals of the overvoltage protection circuit and the threshold voltage.

Preferably, the passive voltage detection unit comprises a Zener diode subunit, whose Zener voltage defines the threshold voltage. By means of the Zener diode subunit the passive voltage detection unit can be realized with cheap and highly reliable components. Therein, the Zener diode subunit may comprise a single Zener diode element or multiple Zener diodes elements connected in series. The term Zener diode within the meaning of the invention refers to components that realize a breakdown voltage in reverse direction based on the Zener effect as well as on the avalanche effect.

Therein, a cathode of the Zener diode subunit may have a common potential with the first terminal of the overvoltage protection circuit. Furthermore, it is preferred that the passive voltage detection unit comprises a first load subunit including a terminal having a common potential with an anode of the Zener diode subunit.

According to a very cost-efficient implementation the other terminal of the load subunit may have a common potential with the second terminal of the overvoltage protection circuit and/or a tap between the Zener diode subunit and the load subunit may be connected to control terminal.

Preferably, the current sink unit comprises series connection of a second load subunit and a switching subunit controllable via the control terminal. The first and/or the second load subunit may be realized by a resistor. Thereby, the energy fed back to the DC link can be converted into heat. The switching subunit may be realized by a transistor, particularly an insulated gate bipolar transistor (IGBT) or by an insulated gate field-effect transistor such as a MOSFET.

For improving robustness of the overvoltage protection circuit according to the invention, it may comprise a voltage limitation unit configured to limit a voltage of the control signal to a predetermined voltage value. Thereby, an overload at the control terminal of the current sink unit, particularly when applying an insulated gate field-effect transistor, may be avoided.

A tap between the passive voltage detection unit and the voltage limitation unit may be connected to the control terminal. Additionally or alternatively, the voltage limitation unit may have a terminal having a common potential with the second terminal of the overvoltage protection circuit.

The voltage limitation unit may comprise a Zener diode subunit, whose Zener voltage defines the voltage value. By means of the Zener diode subunit the voltage limitation unit can be realized with cheap and highly reliable components. Therein, the Zener diode subunit may comprise a single Zener diode element or multiple Zener diode elements connected in series.

The passive voltage detection unit may be connected to the control terminal directly or via a resistor unit. By using the resistor unit, the voltage at the control terminal can be reduced.

Alternatively or additionally, the overvoltage protection circuit may comprise a resistor unit for discharging a capacity, particularly a gate capacity, of the control terminal. This allows a controlled discharge of the capacity, when the voltage across the terminals of the overvoltage protection circuit falls below the threshold voltage. Typically, a first terminal of the resistor unit is connected to the control terminal and a second terminal of the resistor unit is connected to the second terminal of the overvoltage protection circuit.

Besides, the above object is solved by a power converter, comprising a DC link with a first potential line and a second potential line and an overvoltage protection circuit for the DC link according to any of the preceding claims connected between the potential lines. Typically, the power converter comprises a DC link capacitor connected between the potential lines. The power converter may further comprise a power unit connected to the DC link.

Preferably, the power converter is configured to convert a DC voltage at the DC link into a multiphase AC current at an output of the power converter. Thus, the power converter may be considered as an inverter. The power converter may alternatively be configured to convert a DC voltage at the DC link into a DC voltage at an output of the power converter. Thus, the power converter may be considered as a DC/DC converter.

Furthermore, the above object is solved by an electric drive device for a vehicle, comprising an electric machine and a power converter according to the invention configured to supply the electric machine. The electric drive device may comprise a switching device configured to disconnect a battery from the DC link.

Finally, the above object is solved by a vehicle, comprising an electric drive device according to the invention, configured to drive the vehicle.

All statements to the overvoltage protection circuit according to the invention apply analogously the power converter according to the invention, to the electric drive device according to the invention and to the vehicle according to the invention so that advantages described with respect to the overvoltage protection circuit may be achieved by them as well.

Further details and advantages of the present invention are described in the following, wherein reference is made to the schematic drawings which show:
- Fig. 1: a block diagram of an embodiment of the electric drive device comprising an embodiment of the power converter according to the invention.
- Fig. 2: a schematic diagram of a first embodiment of the overvoltage protection circuit according to the invention for the electric drive device shown in Fig. 1.
- Fig. 3: a schematic diagram of a further embodiment of the overvoltage protection circuit according to the invention for the electric drive device shown in Fig. 1.
- Fig. 4: curves of electric quantities over time when operating the overvoltage protection circuit shown in Fig. 3.
- Fig. 5: a block diagram of an embodiment of the vehicle according to the invention.

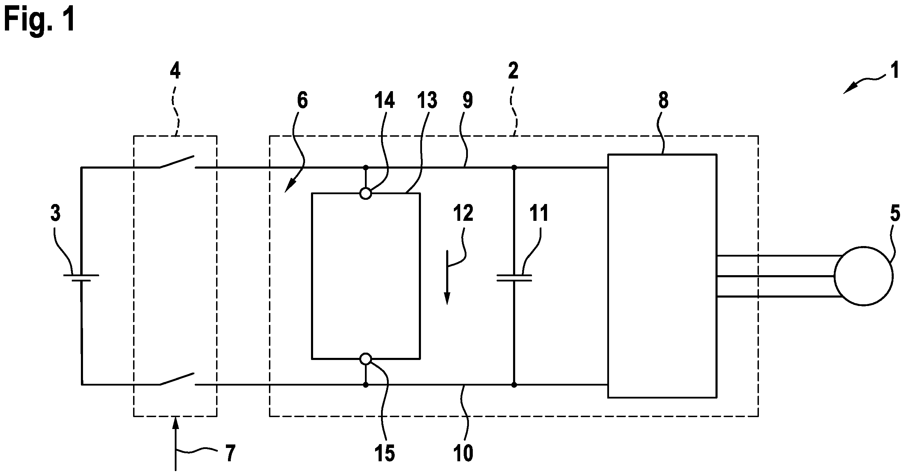

Fig. 1 is a block diagram of an embodiment of an electric drive device 1 comprising an embodiment of a power converter 2. The electric drive device 1 further comprises a battery 3 being a high voltage battery with a maximum operation voltage of at least 400 V, a switching device 4 realized by a double-pole contactor and an electric machine 5.

The power converter 2 is configured to convert a DC voltage provided by the battery 3 into a three-phase AC current for the electric machine 5. The switching device 4 is connected between the battery 3 and the power converter 2 and configured to disconnect a DC link 6 of the power converter 2 upon receiving an external signal 7. An event, in which the battery 3 and the power converter 2 are disconnected is commonly known as a load dump.

The electric power converter 2 comprises a power unit 8 having a plurality of semiconductor switching elements that are controllable by a control unit (not shown) such that a DC voltage provided by the battery 3 is converted into a three-phase AC current. The DC link 6 comprises a first potential line 9 and a second potential line 10, wherein the first potential line 9 is used for the high potential of the DC link 6 and the second potential line 10 is used for the low potential of the DC link 6. A DC link capacitor 11 for smoothing a voltage 12 of the DC link is connected between the potential lines 9, 10.

Furthermore, the power converter 2 comprises an overvoltage protection circuit 13 having a first terminal 14 that is connected to the first potential line 9 and a second terminal 15 that is connected to the second potential line 10. In the case of a load dump electric energy may be fed back from the electric machine 5 through the power unit 8 into the DC link 6 which is disconnected from the battery 3. Thus, the electric energy charges the DC link capacitor 11 or affects other components of the DC link 6. If a maximum rated voltage at such components is exceed, the components may be damaged or destroyed. The overvoltage protection circuit 13 is configured to absorb the electric energy for protecting the components.

Hereafter, embodiments of the overvoltage protection circuit 13 are described that can be used with the power converter 2 as shown in Fig. 1. Therein, equal or equivalent components are denoted by identic reference signs.

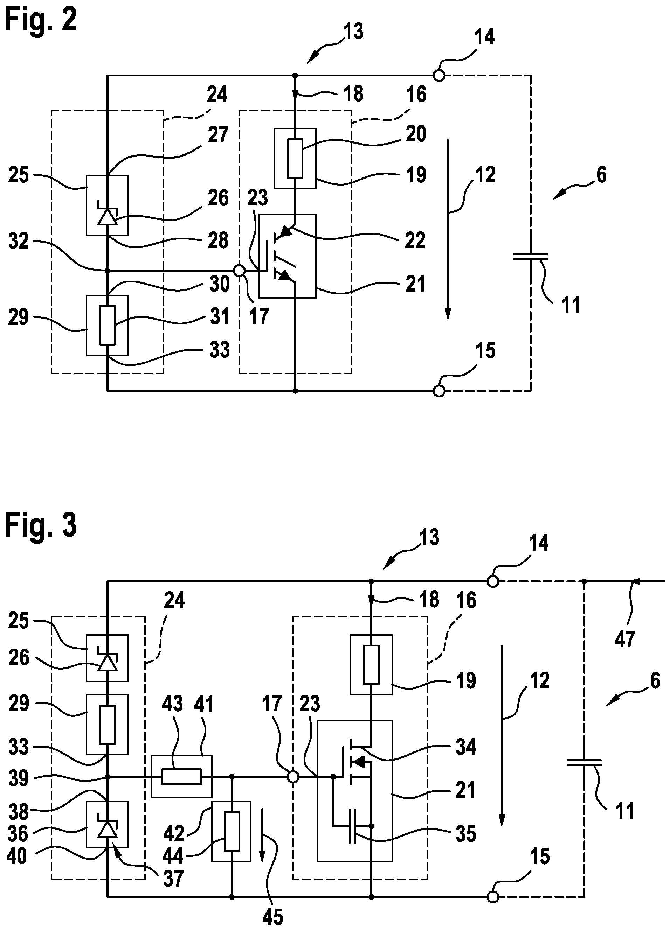

Fig. 2 is a schematic diagram of a first embodiment of the overvoltage protection circuit 13. Therein, dashed lines represent a connection of the DC link capacitor 11 to the terminals 14, 15.

The overvoltage protection circuit 13 further comprises a current sink unit 16 having a control terminal 17 and being configured to allow a current flow 18 from the first terminal 14 to the second terminal 15 for absorbing an overvoltage in the DC link 6 depending on a control signal at the control terminal 17. The current sink unit 16 comprises a series connection of a load subunit 19 formed by one resistor element 20 or by multiple resistor elements 20 and a switching subunit 21 formed by an IGBT 22. The control terminal 17 is connected to a gate 23 of the IGBT 22. Thus, by providing the control signal to the control terminal 17 the switching subunit 21 can be switched on and off, therein allowing or blocking the current flow 18. When being switched on the electric energy fed back to the DC link 6 is converted into heat.

Furthermore, the overvoltage protection circuit 13 comprises a passive voltage detection unit 24 connected between the first terminal 14 and the second terminal 15 and configured to provide the control signal to the control terminal 17 upon detecting that the voltage 12 exceeds a predefined threshold voltage. Thereto, the passive voltage detection unit 24 comprises a Zener diode subunit 25, whose Zener voltage defines the threshold voltage. The Zener diode subunit comprises one or more Zener diode elements 26, wherein multiple Zener diode elements 26 are connected in series so that their respective Zener voltages sum up to the Zener voltage of the Zener diode subunit 25.

A cathode 27 of the Zener diode subunit 25 has a common potential with the first terminal 14, i.e. the cathode 27 is connected directly to the first terminal 14. An anode 28 of the Zener diode subunit 25 is connected to a load subunit 29 such that the first terminal 30 of the load subunit 29 have a common potential with the anode 28. A second terminal 33 of the load subunit has a common potential with a second terminal 15. The load subunit may be formed by a single resistor element 31 or by multiple interconnected resistor elements 31. A tap 32 between the Zener diode subunit 25 and the load subunit 29 is connected directly or via a resistor unit (not shown) to the control terminal 17.

When the voltage 12 exceeds the Zener voltage of the Zener diode subunit 25 or the threshold voltage of the passive voltage detection unit 24, respectively, the Zener diode subunit 25 becomes conductive in reverse direction and a voltage being approximately the difference between the voltage 12 and the Zener voltage is provided as control signal to the control terminal 17. When the voltage of the control signal is high enough for opening the switching subunit 21, the current flow 18 begins and allows a consumption of energy fed back to the DC link 6. Therein, the threshold voltage or the Zener voltage, respectively, is chosen such that it lies between the maximum operation voltage of the battery 3 and the maximum rated voltage of the DC link capacitor 11 or other components of the DC link 6. When the voltage 12 decreases and reaches the threshold voltage, the Zener diode subunit 25 becomes blocking and the switching subunit 21 turns off. Then, the voltage 12 remains near the threshold voltage at a level being lower than the maximum rated voltage.

Fig. 3 is a schematic diagram of a further embodiment of the overvoltage protection circuit 13, which corresponds to the aforementioned one, wherein differences therebetween are described hereafter.

The switching subunit 21 of the current sink unit 16 is formed by a MOSFET 34, wherein a gate capacity 35 of the MOSFET 34 is depicted separately. The passive voltage detection unit 24 is realized by a series connection of the Zener diode subunit 25 and the load unit 29. Additionally, the overvoltage protection circuit 13 comprises the voltage limitation unit 36 configured to limit the voltage of the control signal to a predetermined voltage value, which is chosen such that the voltage at the control terminal 17 does not exceed a maximum rated control terminal voltage of the switching subunit 21.

The voltage limitation unit 36 is realized by a Zener diode subunit 37, whose Zener voltage defines the voltage value. The Zener diode subunit 37 may be realized by one Zener diode element or by multiple Zener diode elements as stated with respect to the Zener diode subunit 25. A cathode 38 of the Zener diode subunit 37 has a common potential with the second terminal 33 of the load unit 29. Therein, a tap 39 between the passive voltage detection unit 34 and the voltage limitation unit 36 is connected to the control terminal 17 and an anode 40 of the voltage limitation unit 36 has a common potential with a second terminal 15.

Furthermore, the overvoltage protection circuit 13 comprises a first resistor unit 41 via which the tap 39 is connected to the control terminal 17. A second resistor unit 42 is connected between the control terminal 17 and the second terminal 15 for allowing the capacity 35 to be discharged when the Zener diode subunit 25 of the passive voltage detection unit 24 is blocking. The resistor units 41, 42 may be realized by one or more resistor elements 43, 44.

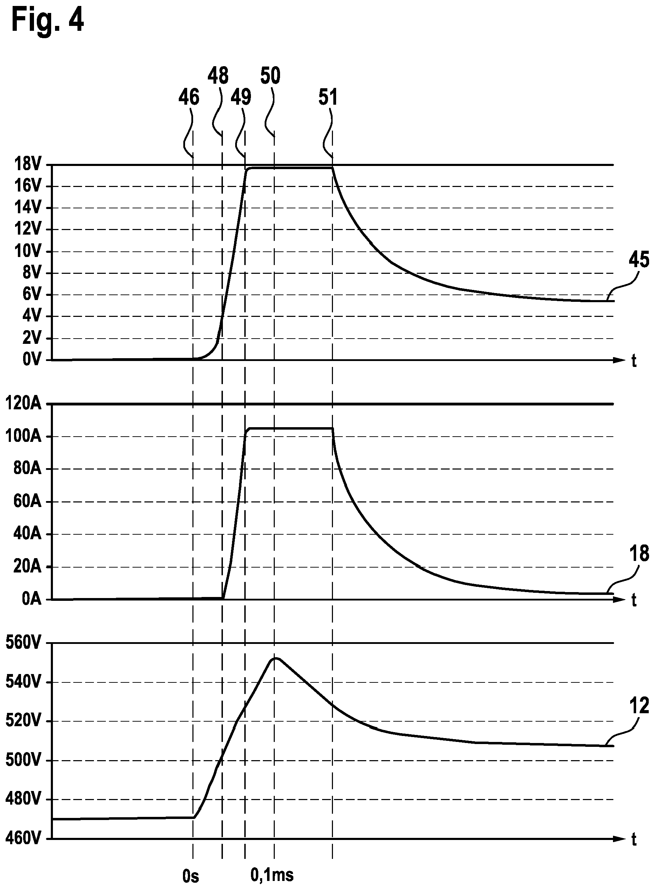

Fig. 4 shows electric quantities over time t when operating the overvoltage protection circuit 13 shown in Fig. 3 in an exemplary configuration. Therein, the gate-source-voltage 45 of the switching subunit 21, the current flow 18 and the voltage 12 of the DC link capacitor are depicted.

According to the exemplary configuration the DC link capacitor 11 has the capacity of 330 µF, the load unit 19 has a resistance of 2.5 Ω and the gate capacity 35 has a capacitance of 4.7 nF. The diode subunit 25 is realized by five Zener diode elements 26 of type 1N5378B each having a Zener voltage of 100 V resulting in a Zener voltage of 500 V of the Zener diode subsection 25. The load subunit 29 has a resistance of 100 Ω, the voltage limitation unit 36 is realized by a Zener diode of type EDZV18B having a Zener voltage of 18 V. The first resistor unit 41 has a resistance of 11 Ω and the second resistor unit 42 has a resistance of 500 Ω.

Prior to a time 46 the DC link capacitor 11 is charged to a voltage of 470 V and the load dump situation is present. At the time 46 a current pulse 47 (see fig. 3) of 300 A with a pulse length of 0.1 ms is injected representing the energy fed back into the DC link 6.

As can be seen in Fig. 4 starting from time 46 the voltage 12 increases approximately linearly due to the injected current pulse 47. At a time 48 the voltage 12 exceeds the threshold voltage of the passive voltage detection unit 24 determined by the Zener voltage of 500 V. Consequently, the gate source voltage 45 rises and the switching subunit 21 of the current sink unit 16 becomes conductive so that the current 18 increases. Subsequently, at a time 49 the gate-source-voltage 45 approximately reaches the voltage value of the voltage limitation unit 36 determined by the Zener voltage of the Zener diode subunit 37. Therein, the voltage limitation unit 36 becomes conductive and stops the increase of the gate-source-voltage 45 and the current 18.

At a time 50 the current pulse 47 has ended and the voltage 12, to which the DC link capacitor 11 is charged, is dissipated by the current sink unit 16 with constant current flow 18. At a time 51 the voltage 12 has increased so much that the voltage limitation unit 36 becomes blocking and the gate source voltage 45 and the current 18 decrease exponentially, wherein the voltage 12 converges towards a voltage being slightly above the threshold voltage or a Zener voltage, respectively.

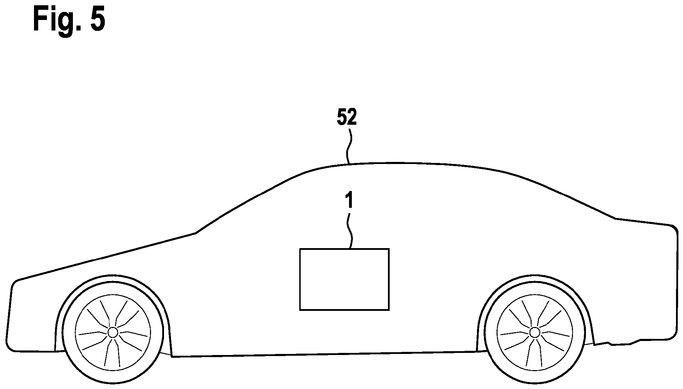

Fig. 5 is a block diagram of a vehicle 52 comprising an electric drive device 1 according to any of the aforementioned embodiments.

According to further embodiments the overvoltage protection circuit 13 does not form part of the electric power converter 2 and is separately arranged between the switching device 4 and the electric power converter 2. Although the electric power converter 2 has been described as being an inverter for converting a DC voltage into an AC current, according to a further embodiment the power converter is a DC/DC converter or has another power converter topology with a DC link.

## Claims

1. Overvoltage protection circuit (13) for a DC link (6) of a power converter (2), comprising
- a first terminal (14) connectable to a first potential line (9) of the DC link (6),
- a second terminal (15) connectable to a second potential line (10) of the DC link (6) and
- a current sink unit (16) having a control terminal (17) and being configured to allow a current flow (18) from one of the terminals (14) to the other terminal (15) for reducing an overvoltage in the DC link (6) depending on a control signal at the control terminal (17),
**characterized by**
a passive voltage detection unit (24) connected between the first terminal (14) and the second terminal (15) and configured to provide the control signal to the control terminal (17) upon detecting that a voltage (12) across the terminals (14, 15) reaches or exceeds a threshold voltage.

2. Overvoltage protection circuit according to claim 1, wherein the passive voltage detection unit (24) is configured to provide a voltage of the control signal as a function of a difference between the voltage (12) across the terminals (14, 15) of the overvoltage protection circuit (13) and the threshold voltage.

3. Overvoltage protection circuit according to claim 1 or 2, wherein the passive voltage detection unit (24) comprises a Zener diode subunit (25), whose Zener voltage defines the threshold voltage.

4. Overvoltage protection circuit according to claim 3, wherein a cathode (27) of the Zener diode subunit (25) has a common potential with the first terminal (14) of the overvoltage protection circuit (13).

5. Overvoltage protection circuit according to claim 3 or 4, wherein the passive voltage detection unit (24) comprises a first load subunit (29) including a terminal (30) having a common potential with an anode (28) of the Zener diode subunit (25).

6. Overvoltage protection circuit according to claim 5, wherein the other terminal (33) of the load subunit (29) has common potential with the second terminal (15) of the overvoltage protection circuit (13) and/or wherein a tap (32) between the Zener diode subunit (25) and the load subunit (29) is connected to control terminal (17).

7. Overvoltage protection circuit according to any of the preceding claims, wherein the current sink unit (16) comprises a series connection of a second load subunit (19) and a switching subunit (21) controllable via the control terminal (17).

8. Overvoltage protection circuit according to any of the preceding claims, comprising a voltage limitation unit (36) configured to limit a voltage of the control signal to a predetermined voltage value.

9. Overvoltage protection circuit according to claim 8, wherein a tap (39) between the passive voltage detection unit (24) and the voltage limitation unit (36) is connected to the control terminal (17) and/or wherein the voltage limitation unit (36) has a terminal (40) having a common potential with the second terminal (15) of the overvoltage protection circuit (13).

10. Overvoltage protection circuit according to claims 8 or 9, wherein the voltage limitation unit (36) comprises a Zener diode subunit (37), whose Zener voltage defines the voltage value.

11. Overvoltage protection circuit according to any of the preceding claims, wherein the passive voltage detection unit (24) is connected to the control terminal (17) directly or via a resistor unit (41) and/or
wherein the overvoltage protection circuit (13) comprises a resistor unit (42) for discharging a capacity of the control terminal (17).

12. Power converter (2), comprising a DC link (6) with a first potential line (9) and a second potential line (10) and an overvoltage protection circuit (13) for the DC link (6) according to any of the preceding claims connected between the potential lines (9, 10).

13. Power converter according to claim 11, which is configured to convert a DC voltage at the DC link (6) into a multiphase AC current at an output of the power converter (2).

14. Electric drive device (1) for a vehicle (52), comprising an electric machine (5) and a power converter according (2) to claim 12 or 13 configured to supply the electric machine (5).

15. Vehicle (52), comprising an electric drive device (1) according to claim 14, configured to drive the vehicle (52).
